# EUROPEAN PATENT SPECIFICATION

(11) **EP 3 160 597 B1**
(45) Date of publication and mention of the grant of the patent: **08.11.2023**
(21) Application number: 15753757.2
(22) Date of filing: 25.06.2015
(51) Int. Cl.: B01D 47/12, A62C 2/08, E21F 5/02, E21F 1/04, E21F 1/00, A62C 99/00, A62C 37/44, A62C 37/36, A62C 2/06, A62C 3/02

(54) **SYSTEM FOR FILTERING THE FRESH AIR FLOWING IN A TUNNEL AND/OR THE EXHAUST GASES FLOWING OUT THEREFROM**
SYSTEM ZUR FILTERUNG DES FRISCHLUFTSTROMS IN EINEM TUNNEL UND/ODER VON DARAUS AUSFLIESSENDEN ABGASEN
SYSTÈME POUR FILTRER L'AIR FRAIS CIRCULANT DANS UN TUNNEL ET/OU LES GAZ D'ÉCHAPPEMENT CIRCULANT HORS DE CE DERNIER

(30) Priority: 25.06.2014 IT VI20140164
(43) Date of publication of application: 03.05.2017
(73) Proprietor: MICHELETTI ENGINEERING & CONSULTING SAGL, 6900 Paradiso Lugano (CH)
(72) Inventor: MICHELETTI, Giorgio, 37015 Sant'Ambrogio di Valpolicella (VR) (IT); MAYER, Erardo Mateo, 20900 Monza (IT)
(74) Representative: Autuori, Angelo
(86) International application number: PCT/IB2015/054789
(87) International publication number: WO 2015/198264

(56) References cited:
- WO-A1-2004/002575
- WO-A1-2008/073022
- CN-Y- 2 707 354
- JP-A- 2006 239 693
- JP-A- 2008 231 749
- US-A- 3 701 235
- Edwin Peterson: "Dust Control Technology White Paper on Dust Theory", , 15 May 2013 (2013-05-15), XP055215862, Retrieved from the Internet: URL:https://web.archive.org/web/2013051519 2936/http://www.dustboss.com/dust-control- technology-white-paper-on-dust-theory [retrieved on 2015-09-24]

## Description

### Field of Application

The present invention is generally applicable to the technical field of the civil engineering and it particularly relates to a system for filtering the fresh air flowing in a tunnel and / or the exhaust gases flowing out therefrom, the tunnel being particularly of railway, road or motorway type.

More particularly, the invention allows to filter the exhaust gases and / or the fresh air through high pressure atomized water, starting from 150 bar.

### Background f the Invention

As known, in case of fire, gas leak or similar accident in a road, motorway or railway tunnel exhaust gases develop being potentially harmful for people near the concerned area.

In fact, by its nature, the exhausted gases move quickly, and may potentially contaminate a very huge area.

Then, in case of such events, there is the need to insulate the area concerned by the accident without creating loss of inlet or fluid-dynamic disorders, to limit as much as possible the consequences thereof, and / or to create an escape for people being in the surrounding areas.

The existing security systems generally act upon the cause of the accident but not upon its consequences. For example, the fire protection systems tend to put out the fire but have no effect on the exhaust gases developing therefrom.

From the Japanese patent application JP2004313753 an example of such security systems is known, which does not mention in any way the treatment of the exhaust gases as a consequence of an accident.

Even in the case of normal vehicular traffic there is still the need to treat the exhaust gases which develop in a tunnel, for example to abate the so-called fine dust (ie, powders having generally an average diameter lower than 10 µm), known to be harmful to human health, or the malodorous substances and / or unburnt particles therein.

From the European patent application EP1544408 a system for the evacuation of exhaust gases from a tunnel is known that includes the washing thereof through spurts of water to decrease the temperature. This document does not specify either the working pressure or the diameter of the water drops. A wet air filtering scrubber for dust and gases produced during tunnel construction is known from JP 2008 231749 A1 and another wet filtering system for scrubbing tunnel air is known from WO 2008/073022 A1.

Furthermore, in the case of fresh air flowing in the tunnel there is the danger that dirt and / or foreign bodies enter in the ventilation duct of the tunnel, obstructing it.

### Summary of the Invention

Object of the present invention is to at least partially overcome the above mentioned drawbacks by providing a system that allows to filter the exhaust gases flowing out from a tunnel and / or fresh air flowing therein, for example a road, motorway or railway tunnel, in a safe, effective and economic manner.

Another object of the invention is to provide a system to filter the exhaust gases flowing out from a tunnel and / or fresh air flowing therein having minimal environmental impact.

Another object of the invention is to provide a system that allows to filter the exhaust gases flowing out from a tunnel and / or fresh air flowing therein with minimum inlet losses.

Another object of the invention is to provide a system to filter the exhaust gases flowing out from a tunnel and / or fresh air flowing therein which is simple to manufacture.

Another object of the invention is to provide a system to filter the exhaust gases flowing out from a tunnel and / or fresh air flowing therein that has a relatively high time duration.

Another object of the invention is to provide a system to filter the exhaust gases flowing out from a tunnel and / or fresh air flowing therein that requires a minimum maintenance.

These objects, and others which will appear more clearly hereinafter are fulfilled by a system having one or more of the features herein described and / or claimed and / or shown.

Advantageous embodiments of the invention are defined in accordance with the appended claims.

### Brief description of the drawings

Further features and advantages of the invention will become more evident reading the detailed description of some preferred not-exclusive embodiments of a system **1,** which are shown as non-limiting example with the help of the annexed drawings wherein:
**FIG. 1** is a schematic axonometric view of a system for the abatement of soot in a tunnel;
**FIG. 2** is a schematic axonometric view of a tunnel **T** with a ventilation duct **TV;**
**FIG. 3** is a sectioned view of a ventilation duct **TV** wherein an embodiment of system **1** is assembled;
**FIG. 4** is a schematic view of certain components of the filtering means **20;**
**FIG. 5** is a schematic top view of an embodiment of system **1;**
**FIG. 6** is a schematic axonometric view of a further embodiment of system **1;**
**FIG. 7** is a schematic view of the assembly of the porous laminar element **220;**
**FIG. 8** is a schematic view of a working phase of the porous laminar element **220;**
**FIG. 9** is a section view of a ventilation duct **TV** wherein a further embodiment of the system **1** is assembled.

### Detailed description of some preferred embodiments

With reference to the above mentioned figures, the system according to the invention, generally indicated with 1, is particularly useful for the filtration of exhaust gases flowing out from a tunnel T, for example the exhaust gases that develop as a result of a potentially dangerous accident, such as a fire or a gas leak, or the exhaust gases that develop in the tunnel as a result of vehicular traffic, whether it is more or less intense.

Certainly, the exhaust gases have a nature and a different composition due to the cause that generates them.

Generally, such exhaust gases direct a solid phase with more or less fine grains, nevertheless being always of micrometric size.

In case of fire, the exhaust gases may include a solid coarse phase, which normally consists of soot and possibly other coarse particles, and a solid fine phase, which normally consists of the so-called fine dust or PM10 (ie powders having generally an average diameter equal to or lower than 10 µm).

The solid coarse phase is generally formed by particles of an average diameter greater than 10 µm, usually up to 100 µm.

On the other hand, in the case of intense vehicular traffic the exhaust gases may comprise the only solid fine phase.

In any case, particularly if the tunnel is placed near an urban centre, there may be the need to abate the polluted unburnt particles and / or the malodorous substances of the exhaust gases.

The system **1** may be configured to abate from the exhaust gases one or more of the solid or fine phases or of the polluted unburnt particles and / or the malodorous substances above mentioned.

Furthermore, the system **1** may be useful to filter the fresh air flowing in the tunnel **T,** so as to prevent dirt and / or foreign bodies to enter therein.

Advantageously, the system **1** may be used in a tunnel **T** that stands above a roadway **R,** for example, a road tunnel, a motorway or a railway.

The system **1** may comprise one or more ports **300** fluidly connected to the outer environment **A** and one or more ports **310** fluidly connected to the tunnel **T.**

Depending on whether the system **1** is used for the filtration of the fresh air flowing in the tunnel **T** or for the exhaust gases flowing out from the tunnel **T** the one or more ports **300, 310** act as inflow or outflow for the filtered / to be filtered fluid.

Furthermore, the system **1** may comprise filtering means **20** interposed between the one or more ports **300, 310** and lying on the fluid line connecting them.

In a first embodiment, the system **1** may comprise detecting means of the accident having at least one sensor element, such as a fire sensor **10** or a fine dust sensor **10'** or an unburnt particles and / or malodorous substances sensor **10",** which may or may not be placed in the tunnel **T,** as appropriate. Then, alarm means may be provided, for example an alarm and / or a warning light **11.**

Furthermore, control means **30** may be provided operatively connected to the detecting means and the filtering means to activate the latter in response to the detection of the potential danger of pollution by the former.

In a first embodiment, the control means may be manual, for example a lever or a button **30** that an operator manually activates once the sensor has detected the situation of potential danger and has set off the alarm **11.**

However, to ensure maximum safety for the operators, the control means may be operable at distance with respect to the tunnel **T.** For example, an operations' station **31** may be provided spaced apart from the tunnel, wherefrom the operator may activate the button **30.**

In this case, both the detecting means and the filtering means should be remotely connected to the operational centre **31,** for example by wires or a wireless connection. In this way, the operator, once alerted by the alarm **11,** may safely activate the filtering means.

Furthermore, to ensure the maximum rapidity of intervention, the control means **30** may be configured to automatically activate the filtering means **20** in response to the detection of the situation of potential danger. In this case, the treatment of the exhaust gases takes place in a totally automatic manner and without the need of operators.

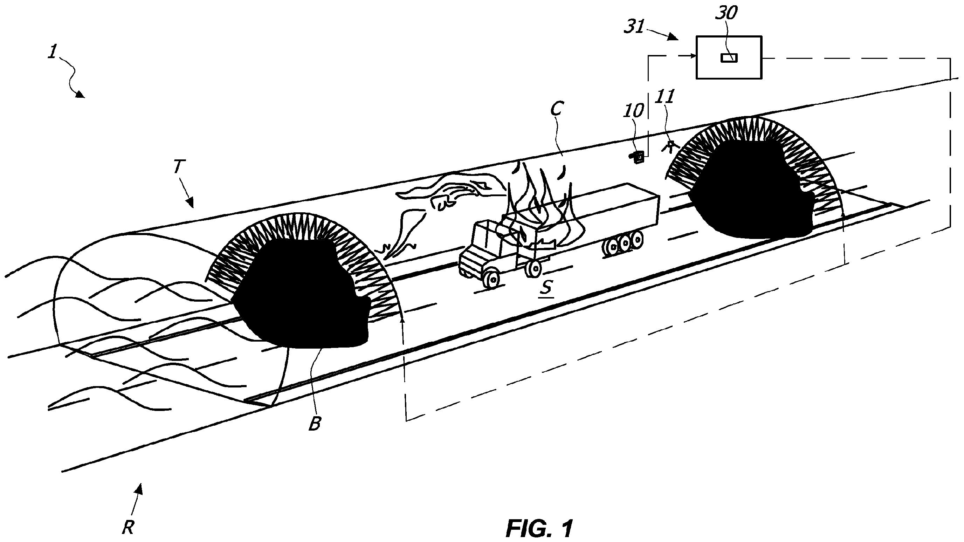

Advantageously, as shown in FIG. 1, in case of fire or gas leak the tunnel **T** may provide a atomized water system to abate soot, possibly being activated by the control means **30,** susceptible to insulate the section **S** of the roadway **R** affected by the fire through barriers **B** of atomized water coming from the vault **C** of the tunnel **T.** This system may be manufactured in accordance with the teachings of the patent application VI2014A000162.

In this way, in case of fire it is possible to secure the upstream or downstream area of the section of the tunnel **T** where the same fire has occurred. In this way, it is possible to evacuate people safely and quickly, as well as to create a safe area for the means and the people involved in the rescue and recovery of the concerned area.

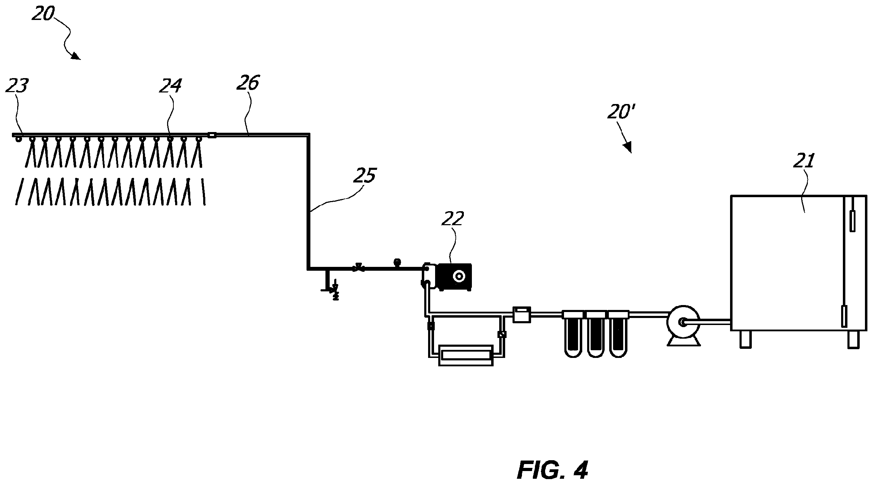

Suitably, as schematically shown in FIG. 4, the filtering means **20** may essentially comprise one or more water reservoirs **21,** pumping means which include one or more high pressure pumps **22,** preferably of the plunger type, and one or more collectors **23,** each one comprising a plurality of high pressure nozzles **24** susceptible to spray atomized water into drops.

According to the invention, the average diameter of the drops of atomized water may be lower than 250 µm, while the minimum working pressure may be of 200 bar.

Suitably, furthermore, the nozzles **24** may be of stabilized flow type, manufactured according to the teachings of the patent application VI2014A000047.

Furthermore, to allow the water supply from the reservoir **21** to the nozzles **24** a line of fluid connection **25** may be provided passing through the pumping means and through the collector or collectors **23.**

Moreover, to power supply the latter, the line **25** may include one or more supply pipes **26,** one for each collector **23.** Each supply pipe **26** may be independently power supplied by pumping means **22.**

As shown hereinafter, the filtering means **20** may include one or more filtering units **20', 20", 20'",** which may have different functions according to the parameters of the atomized water used.

The high pressure atomized water is extremely effective as filtering means, and it allows to abate completely the soot that is emanated in case of fire or gas leak. Furthermore, it has no environmental impact, and it allows to have reduced inlet losses with respect to the classic sleeve or electrostatic filters.

It is understood that the system **1** may be used for both the above mentioned purposes, that is, for filtering both the fresh air flowing in the tunnel **T** and the exhaust gases flowing out from the tunnel **T.**

The same filtering unit **20'** may act both on the fresh air flowing in the tunnel **T** and on the exhaust gases flowing out from the tunnel **T.** On the other hand, the system may comprise one or more filtering units **20', 20", 20‴** to act upon the fresh air flowing in the tunnel **T** and one or more filtering units **20', 20", 20‴** to act upon the exhaust gases flowing out from the tunnel **T.**

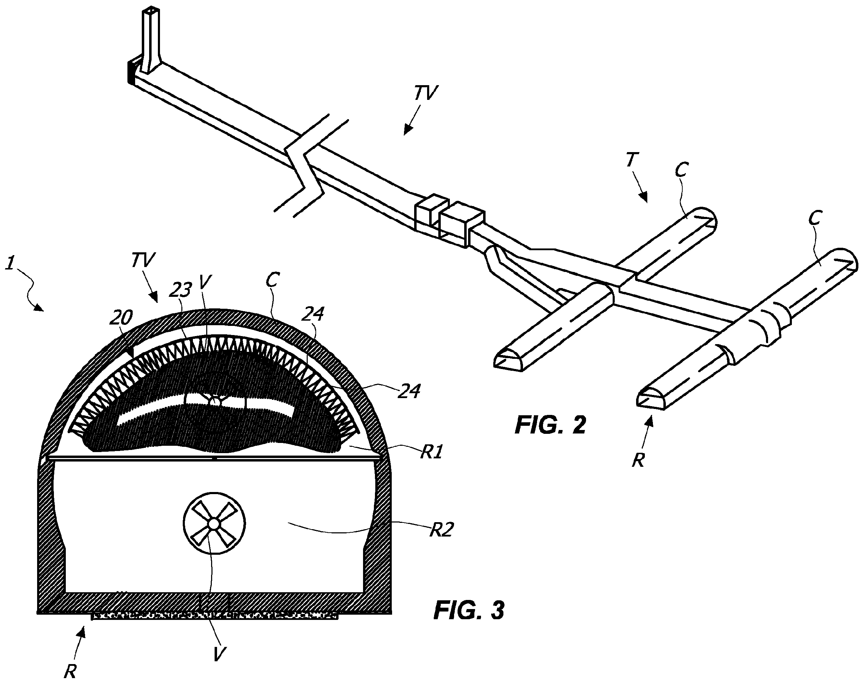

Advantageously, as shown in FIG. 2, the tunnel **T** may include one or more ventilation ducts **TV,** possibly transverse ventilation ducts, fluidly connected to the outer environment.

Each transverse ventilation duct may include a first branch **R1** for the evacuation of the exhaust gases from the tunnel **T** towards the outer environment and a second branch **R2** for the inflow of fresh air from the outer environment into the tunnel **T.** As shown in FIG. 3, the branches **R1** and **R2** may be overlapped.

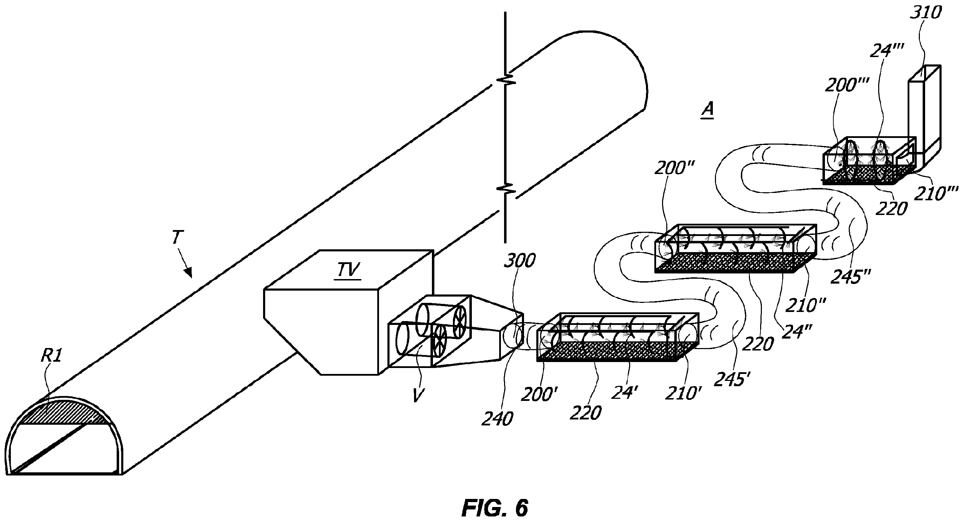

In a further embodiment, shown for example in FIG. 6, the ventilation duct **TV** may have smaller dimensions, mainly being formed by a ventilation chamber and a compartment wherein the fans lie.

In a known manner, the presence or absence of the transverse ventilation duct and, if present, its configuration depends on the features of the tunnel **T,** for example on its length, on the traffic that has to carry and on its geographical position.

Suitably, these transverse ventilation ducts **TV** may include fan means **V,** of known type, to force the evacuation of the exhaust gases from the tunnel **T** towards the outer environment and / or the inflow of fresh air from the outer environment towards the tunnel **T.** To the object, the ventilation means **V** may be placed in the branches **R1** and / or **R2.**

In a preferred but not exclusive embodiment, the one or more collectors **23** with the relative high pressure nozzles **24** may be inserted in the transverse ventilation duct **TV,** and in particular in the branches **R1** and / or **R2.**

Advantageously, where the fan means **V** are configured to force the inflow of fresh air from the outer environment towards the tunnel, the nozzles **24** may be susceptible to prevent the entry of dirt and / or foreign bodies therein.

Preferably, therefore, the nozzles **24** may be placed at the entry of the ventilation duct **TV,** with the fan means **V** placed downstream thereof along the forwarding direction of the fresh air from the outer environment **A** towards the tunnel **T.** However, there may be more filtering units in series, possibly with more fan means placed between two or more units.

Depending on requirements, the nozzles **24** may spray atomized water continuously, at predetermined time intervals or selectively, for example being controlled by the control means **30.** Moreover, there may be a sensor that signals the possible entry of dirt or foreign bodies, possibly activating the nozzles **24** in an automatic way.

According to the invention the average diameter of drops of the water is lower than 250 µm.

According to the invention, the minimum pressure may be of 200 bar, and preferably of 250 bar.

This allows to minimize the environmental impact of the filtering means, in addition to a considerable saving of water.

In this case, there may be one or more filtering units, which are identical or different. In the embodiment shown in the figures there is a single filtering unit **20'.**

On the other hand, even where the fan means **V** are configured to force the evacuation of the exhaust gases from the tunnel towards the outer environment there may be one or more filtering units, which are identical or different.

In the preferred but not exclusive embodiment shown in the figures, the filtering means **20** may include more filtering units **20', 20", 20'",** fluidly connected in series. Each of them may have a specific function.

In particular, the first filtering unit **20'** may be susceptible to abate the solid coarse phase present in the exhaust gases, the second filtering unit **20"** may be susceptible to abate the solid fine phase (fine dust or PM10) present in the exhaust gases and the third filtering unit **20‴** may be susceptible to abate the malodorous substances and / or unburnt particles present in the exhaust gases.

Each one of the filtering units **20', 20", 20‴** may have a respective first, second and third inflow **200', 200", 200‴** for the exhaust gases to be treated and a respective first, second and third outflow **210', 210", 210‴** for the treated exhaust gases.

Advantageously, the control means **30** may be configured to selectively activate the different filtering units depending on the danger detected by the detecting means.

In particular, the control means **30** may activate all three filtering units **20', 20", 20‴** if the fire sensor **10** detects the presence of the first solid coarse phase and in particular of soot.

Since the same generally develops due to the fire, the sensor **10** may be a temperature or opacity sensor, respectively calibrated to give an alarm signal if the temperature or opacity detected exceed a predetermined threshold value. On the other hand, the sensor **10** may be susceptible to detect the presence of the solid coarse phase in a concentration greater than a predetermined threshold value.

Furthermore, the control means **30** may activate the only second and third filtering unit **20"** and **20‴** if the fine dust sensor **10'** detects the presence thereof in a concentration greater than a predetermined threshold value, which is generally fixed by law.

Moreover, the control means **30** may activate the only third filtering unit **20‴** if the unburnt particles and / or malodorous substances sensor **10"** detects these malodorous substances and / or unburnt particles exceeding a predetermined threshold value, which is generally fixed by law.

Suitably, the sensors **10, 10'** and **10"** may be connected together in cascade, so that if the first detects a potential danger the other two can not send signals and so forth.

In a preferred but not exclusive embodiment, the first filtering unit **20'** may include one or more porous laminar elements **220,** which for example may be made of nonwoven polyamide or polyester fabric.

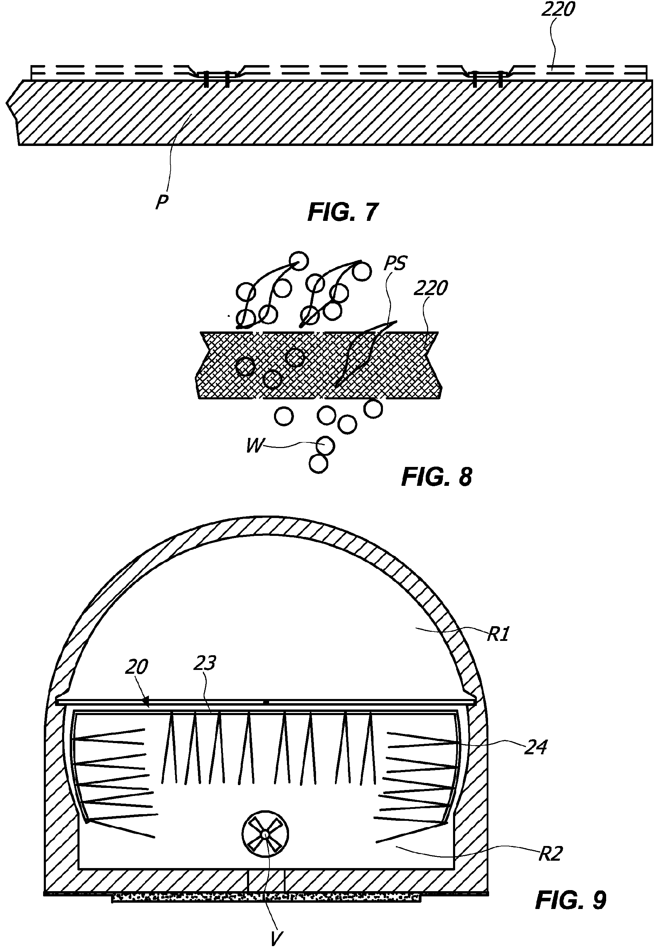

The use of the porous laminar element **220** is highly advantageous, since it allows to collect the entire solid coarse phase and in particular the soot, without losses in the exhausting water. To the object, the porosity of the porous laminar element **220** may be chosen so as to retain the solid particles **PS** and let the water **W** flow, as schematically shown in FIG. 8.

Once exhausted, the laminar element **220** may be replaced by a new one. To the object, the laminar element **220** may be assembled in a removable manner.

Advantageously, the porous laminar element **220** may be placed below the high pressure nozzles **24'** so that the mixture of water and solid coarse phase is collected by gravity thereto. To the object, the laminar element **220** may be assembled on the floor **P** of the ventilation duct **TV** or of the filtering units **20', 20", 20‴.**

According to the invention, the porous laminar element **220** may have a permeability greater than or equal to 85 l / s m².

According to the invention, the porous laminar element **220** may have a porosity not lower than 85%, with an average pores diameter of 100 µm.

Preferably, the porous laminar element **220** may be of the type susceptible to resist to high temperatures, indicatively with a maximum temperature of use of 210 ° C.

It is understood that even the other filtering units **20"** and **20‴** may include one or more laminar elements **220,** which may be identical to those used for the filtering unit **20'** or different, for example having different porosity.

Advantageously, the exhaust gases and the atomized water flowing out from the first high pressure nozzles **24'** may be in counter-current between them inside the first filtering unit **20'.** This allows a high efficiency of abatement of the solid coarse phase.

To selectively abate the solid coarse phase from the exhaust gases, the atomized water has to be sprayed at lower working pressures and into drops having an average diameter greater than the other filtering units **20"** and **20‴.**

Therefore, the atomized water flowing out from the first high pressure nozzles **24'** may be in drops of an average diameter of 80 µm to 200 µm and may have a working pressure of 200 bar to 280 bar.

On the other hand, the atomized water flowing out from the second high pressure nozzles **24"** of the second filtering unit **20"** may be in drops of an average diameter of 5 µm to 30 µm and at a working pressure of 250 bar to 350 bar. Suitably, inside the second filtering unit **20"** the exhaust gases and the atomized water flowing out from the second high pressure nozzles **24"** may be in co-current.

Both the first and the second filtering unit **20', 20"** act physically upon the exhaust gases, respectively abating in a selective manner the solid coarse phase and in particular the soot, and the fine one. To abate the unburnt particles and / or the malodorous substances, the third filtering unit **20‴** act both physically and chemically upon the exhaust gases, by oxidising these mixtures.

To the object, the system may comprise one or more containers **230** of an oxidising product, such as ozone, to be added to the water. In this way, from the third high pressure nozzles **24‴** atomized water is released supplied with the oxidising product.

Advantageously, the third filtering unit **20‴** may be configured so as the third high pressure nozzles **24‴** spray atomized water into drops having an average diameter of 5 µm to 30 µm and at a working pressure of 200 bar to 300 bar. Suitably, furthermore, the exhaust gases to be filtered and the atomized water flowing out from the third high pressure nozzles **24‴** may be in co-current and tangentially relative.

Preferably, each one of the filtering units **20', 20", 20‴** may include a respective support structure **205', 205", 205‴,** for example a steel structure, and a respective high pressure pump **22', 22", 22‴** connected to a respective collector **23', 23", 23‴.**

In a preferred but not exclusive embodiment of the invention, the at least one filtering unit **20', 20", 20‴** may be placed inside the ventilation duct **TV** of the tunnel **T.**

For example, the at least one filtering unit **20', 20", 20‴** may be placed at the entry of the ventilation duct **TV.**

On the other hand, in another embodiment, the at least one filtering unit **20', 20", 20‴** may be spaced apart from the tunnel **T,** externally thereto.

This embodiment is particularly useful in case the conformation of the tunnel **T** and the surrounding landscape is such to not allow the manufacturing of long ventilation ducts, such as in the case of towns tunnels **T** or tunnels placed nearby urban centres.

In this case, the filtering units **20', 20", 20‴** act as real filtering modules, that may be placed where the space surrounding the tunnel **T** allows it. For example, the filtering units or modules **20', 20", 20‴** may be assembled on support elements, for example steel towers, possibly in an above-ground position with respect to the tunnel **T.**

Then, depending on the space available, the filtering modules **20', 20", 20‴** may be assembled side by side or overlapped.

In this embodiment, the at least one filtering unit **20', 20", 20‴** may be fluidly connected to the tunnel **T** and / or to the ventilation duct **TV** thereof, possibly through one or more flexible pipes **240.**

In case of more filtering modules **20', 20", 20‴,** the same may be connected to each other through respective flexible pipets **245', 245".**

Suitably, each filtering module **20', 20", 20‴** may be accessible by an operator for repair or maintenance, for example through a port or an appropriate passage.

In this case, the support structure **205', 205", 205‴** of each filtering module **20', 20", 20‴** may internally include the high pressure nozzles **24', 24", 24‴.**

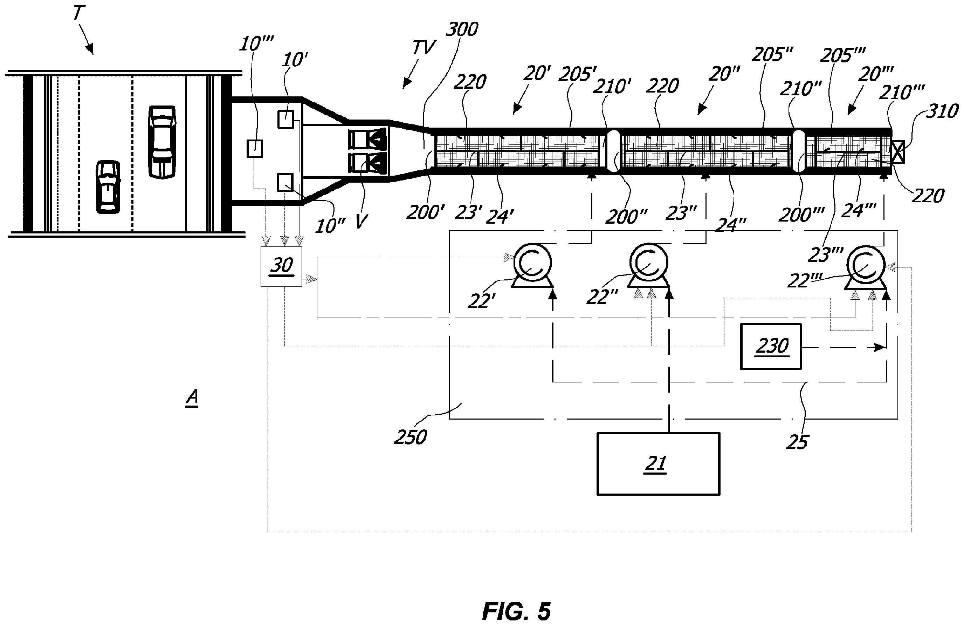

Furthermore, in a preferred but not exclusive embodiment, one or more operative modules **250** may be provided outside the tunnel T which contain the high pressure pumps **22', 22", 22‴.** As particularly shown in FIG. 5, each filtering module **20', 20", 20‴** may be fluidly connectable with the operative module **250** and with a water reservoir **21.**

It is understood that the above mentioned embodiment with the nozzles **24** susceptible to prevent the entry into the tunnel **T** of dirt and foreign bodies may further be manufactured with the filtering modules **20', 20", 20‴.**

In other words, one or more filtering modules **20', 20", 20‴** may be provided susceptible to prevent the entry therein of dirt and foreign bodies. Certainly, in this case, the fan means **V** have to be configured to force the inflow of fresh air into the tunnel **T.**

From the above description, it is clear that the system **1** achieves the intended objects.

In particular, the system **1** allows the treatment of exhaust gases flowing out from and / or flowing in a tunnel **T** with minimum environmental impact, since it exclusively uses atomized water.

Furthermore, the system **1** allows the treatment of exhaust gases flowing out from and / or flowing in a tunnel **T** with minimum inlet losses, since there is almost no physical barrier to the forwarding of the exhaust gases.

Moreover, the system **1** is simple to manufacture and manage, it has a relatively high time duration and it requires a minimum maintenance.

The system **1** is susceptible of numerous modifications and variations. All the details may be replaced with other technically equivalent elements, and the materials may be different according to requirements, without departing from the scope of the invention defined by the appended claims.

## Claims

1. A system for filtering fresh air flowing in a tunnel **(T)** overlying one roadway **(R)** and / or for filtering exhaust gases flowing out therefrom **(T),** comprising:
- at least one first port **(300, 310)** fluidly connectable with the outer environment **(A)** for the flowing in of fresh air, respectively fluidly connectable with the tunnel **(T)** for the inflow of the exhaust gases, to be filtered;
- filtering means **(20)** to filter the exhaust gases and / or the fresh air;
- at least one second port **(300, 310)** fluidly connectable with the tunnel **(T)** for exhausting the fresh air, respectively fluidly connectable with the outer environment **(A)** for exhausting the filtered exhaust gases;
- a first line for the fluid connection of said at least one first port **(300, 310)** and at least one second port **(300, 310)** passing through said filtering means **(20);**
- fan means **(V)** to force the evacuation of the exhaust gases from the tunnel **(T)** towards the outer environment or the inflow of fresh air from the outer environment into the tunnel **(T);**
wherein said filtering means **(20)** comprise at least one filtering unit **(20', 20", 20‴)** that includes:
- at least one water reservoir **(21);**
- pumping means **(22);**
- a plurality of high pressure nozzles **(24)** to spray atomized water;
- a line **(25)** for the fluid connection of said at least one water reservoir **(21)** with said high pressure nozzles **(24)** passing through said pumping means **(22);**
wherein said pumping means **(22)** include at least one high pressure pump; and
wherein said plurality of high - pressure nozzles **(24)** spray atomized water into drops having an average diameter lower than 250 µm, and at a minimum working pressure of 200 bar, and
wherein said at least one filtering unit **(20', 20", 20‴)** includes at least one porous laminar element **(220)** for the collection of residues of filtration of the exhaust gases and / or the fresh air, said at least one porous laminar element **(220)** being assembled in said at least one filtering unit **(20', 20", 20‴)** in a removable manner; and
wherein said at least one porous laminar element **(220)** is placed below said high pressure nozzles **(24)** to collect the mixture of water and filtration residues, the porosity thereof being such as to allow water to pass therethrough retaining the filtration residues; and
wherein the porous laminar element **(220)** has a permeability greater than or equal to 85 l / s m² and a porosity not lower than 85%, with an average pores diameter of 100 µm.

2. System according to claim 1, wherein said at least one porous laminar element **(220)** is made of nonwoven polyamide or polyester fabric.

3. System according to any one of the preceding claims, wherein said fan means **(V)** are configured to force the evacuation of the exhaust gases from the tunnel **(T)** towards the outer environment **(A),** said at least one filtering unit **(20', 20", 20‴)** being configured to filter the exhaust gases flowing out from the tunnel **(T)** to pump filtered exhaust gases in the outer environment.

4. System according to any one of the preceding claims, wherein said at least one filtering unit **(20', 20", 20‴)** comprises a first filtering unit **(20')** configured to abate a first solid coarse phase of the exhaust gases having a first predetermined minimum diameter, said first filtering unit **(20')** comprising at least one first inflow **(200')** for the exhaust gases with said first solid coarse phase, at least one first outflow **(210')** for the exhaust gases free of said first solid coarse phase being provided.

5. System according to claim 4, wherein said first filtering unit **(20')** is configured in such a manner so as said first high pressure nozzles **(24')** spray atomized water into drops having an average diameter of 80 µm to 200 µm and at a working pressure of 200 bar to 280 bar.

6. System according to claim 4 or 5, wherein said exhaust gases with said first solid coarse phase and the atomized water flowing out from said first high pressure nozzles **(24')** flow in counter-current.

7. System according to any one of claims 4 to 6, wherein said at least one filtering unit **(20', 20", 20‴)** comprises a second filtering unit **(20")** configured to abate a second solid fine phase of the exhaust gases having a second maximum predetermined diameter, said second filtering unit **(20")** comprising at least one second inflow **(200")** for the exhaust gases with said second solid fine phase and at least one second outflow **(210")** for the exhaust gases free of said second solid fine phase.

8. System according to claim 7, wherein said second solid fine phase consists of particles having an average diameter lower than 10 µm that develop in the tunnel (T) as a result of vehicular traffic.

9. System according to claim 7 or 8, wherein said high pressure nozzles **(24)** of said second filtering unit **(20")** are second high pressure nozzles **(24),** said second filtering unit **(20")** being configured in such a manner that said second high pressure nozzles **(24)** spray atomized water into drops having an average diameter of 5 µm to 30 µm and at a working pressure of 250 bar to 350 bar.

10. System according to claim 7, 8 or 9, wherein said exhaust gases with said second solid fine phase and the atomized water flowing out from said second high pressure nozzles **(24)** flow in co-current.

11. System according to any one of claims 4 to 10, wherein said at least one filtering unit **(20', 20", 20‴)** comprises a third filtering unit **(20‴)** configured to abate malodorous substances and / or unburnt particles present in the exhaust gases, said third filtering unit **(20‴)** comprising at least one third inflow **(200‴)** for the exhaust gases to be filtered and at least one third outflow **(210‴)** for the filtered exhaust gases, the system further comprising at least one container **(230)** of an oxidising product to be added to water to chemically act upon the exhaust gases to be filtered flowing in through said third inflow **(200‴)** so as to abate said malodorous substances and / or unburnt particles.

12. System according to claim 11, wherein said high pressure nozzles **(24)** are third high pressure nozzles **(24‴),** said line of fluid connection **(25)** fluidly connecting said at least one water reservoir **(21)** and said at least one container **(230)** of oxidising product with said third high pressure nozzles **(24‴),** said third filtering unit **(20‴)** being configured in such a manner that said third high pressure nozzles **(24‴)** spray atomized water into drops having an average diameter of 5 µm to 30 µm and at a working pressure of 200 bar to 300 bar.

## Patentansprüche

1. System zur Filterung von Frischluft, die in einem Tunnel (T) über einer Fahrbahn (R) strömt, und/oder zur Filterung von Abgasen, die aus dem Tunnel (T) ausströmen, umfassend:
- mindestens einen ersten Anschluss (300, 310), der jeweils mit der äußeren Umgebung (A) zur Bereitstellung einer Frischluftverbindung oder mit dem Tunnel (T) zum Einlass von Abgasen, die gefiltert werden sollen, in Fluidverbindung gebracht werden kann;
- Filtermittel (20) zum Filtern der Abgase und/oder der Frischluft;
- mindestens einen zweiten Anschluss (300, 310), der mit dem Tunnel (T) strömungsmäßig verbunden werden kann, um die Frischluft abzulassen, oder der mit der äußeren Umgebung (A) strömungsmäßig verbunden werden kann, um die gefilterten Abgase abzulassen;
- eine erste Leitung zur Fluidverbindung des mindestens eines ersten Anschlusses (300, 310) und des mindestens einen zweiten Anschlusses (300, 310), die durch die Filtereinrichtung (20) verläuft;
- Gebläsemittel (V), um die Ableitung der Abgase aus dem Tunnel (T) in die äußere Umgebung oder das Einströmen von Frischluft aus der äußeren Umgebung in den Tunnel (T) zu erzwingen;
wobei die Filtermittel (20) mindestens eine Filtereinheit (20', 20", 20‴) umfassen, die umfasst:
- mindestens ein Wasserreservoir (21);
- Mittel zum Pumpen (22);
- eine Vielzahl von Hochdruckdüsen (24) zum Versprühen von zerstäubtem Wasser;
- eine Leitung (25) für die Fluidverbindung des mindestens einen Wasserreservoirs (21) mit den Hochdruckdüsen (24), die durch die Pumpeinrichtung (22) verläuft;
wobei die Pumpmittel (22) mindestens eine Hochdruckpumpe umfassen; und wobei die Vielzahl von Hochdruckdüsen (24) Wasser in
Tropfen mit einem durchschnittlichen Durchmesser von weniger als 250 Mikrometer und einem Mindestarbeitsdruck von 200 bar zerstäuben, und
wobei die mindestens eine Filtereinheit (20', 20", 20‴) mindestens ein
poröses laminares Element (220) zum Sammeln von Filterrückständen der Abgase und/oder der Frischluft umfasst, wobei das mindestens eine poröse laminare Element (220) in der mindestens einen Filtereinheit (20', 20", 20‴) herausnehmbar montiert ist; und
wobei das mindestens eine poröse laminare Element (220) unter den Hochdruckdüsen (24) zum Auffangen des Gemischs aus Wasser und Filtrationsrückständen angeordnet ist, wobei die Porosität desselben so beschaffen ist, dass Wasser durchgelassen und die Filtrationsrückstände zurückgehalten werden; und
wobei das poröse laminare Element (220) eine Permeabilität von größer gleich 85 l/s m2 und einer Porosität von nicht weniger als 85%, mit einem durchschnittlichen Porendurchmesser von 100 Mikrometern aufweist.

2. System nach Anspruch 1, wobei das mindestens eine poröse laminare Element (220) aus Vliesstoff aus Polyamid oder Polyestergewebe ausgebildet ist.

3. System nach einem der vorhergehenden Ansprüche, wobei die Gebläsemittel (V) so konfiguriert sind, dass sie die Ableitung der Abgase aus dem Tunnel (T) in Richtung der äußeren Umgebung (A) erzwingen, wobei die mindestens eine Filtereinheit (20', 20", 20‴) zur Filterung der Abgase, die aus dem Tunnel (T) strömen, ausgebildet ist, um gefilterte Abgase in die äußere Umgebung zu pumpen.

4. System nach einem der vorhergehenden Ansprüche, wobei die mindestens eine Filtereinheit (20', 20", 20‴) eine erste Filtereinheit (20') umfasst, die so ausgebildet ist, dass sie eine erste grobe Feststoff-Phase der Abgase mit einem ersten vorbestimmten Mindestdurchmesser abscheidet, wobei die erste Filtereinheit (20') mindestens einen ersten Einlass (200') für die Abgase mit der ersten festen Grobphase sowie mindestens einen ersten Auslass (210') für die Abgase, die frei von der ersten festen Grobphase sind, umfasst.

5. System nach Anspruch 4, wobei die erste Filtereinheit (20') so ausgebildet ist, dass die ersten Hochdruckdüsen (24') zerstäubtes Wasser in Tropfen mit einem durchschnittlichen Durchmesser von 80 Mikrometern bis 200 Mikrometern und mit einem Arbeitsdruck von 200 bar bis 280 bar sprühen.

6. System nach Anspruch 4 oder 5, bei dem die Abgase mit der ersten groben Feststoff-Phase und das aus den ersten Hochdruckdüsen (24') ausströmende zerstäubte Wasser im Gegenstrom fließen.

7. System nach einem der Ansprüche 4 bis 6, wobei die mindestens eine Filtereinheit (20', 20", 20‴) eine zweite Filtereinheit (20") umfasst, die so konfiguriert ist, dass sie eine zweite feine Feststoff-Phase des Abgases mit einem zweiten vorgegebenen maximalen Durchmesser abscheidet, wobei die zweite Filtereinheit (20") mindestens einen zweiten Einlass (200") für die Abgase mit der zweiten feinen Feststoff-Phase und mindestens einen zweiten Auslass (210") für die Abgase ohne die zweite feine Feststoff-Phase umfasst.

8. System nach Anspruch 7, wobei die zweite feine Feststoff-Phase aus Partikeln mit einem durchschnittlichen Durchmesser von weniger als 10 Mikrometern besteht, die sich im Tunnel (T) als Folge von Fahrzeugverkehr entwickeln.

9. System nach Anspruch 7 oder 8, wobei die Hochdruckdüsen (24) der zweiten Filtereinheit (20") zweite Hochdruckdüsen (24) sind, wobei die zweite Filtereinheit (20") so ausgebildet ist, dass die zweiten Hochdruckdüsen (24) zerstäubtes Wasser in Tropfen mit einem durchschnittlichen Durchmesser von 5 Mikrometern bis 30 Mikrometern und mit einem Arbeitsdruck von 250 bar bis 350 bar sprühen.

10. System nach Anspruch 7, 8 oder 9, wobei die Abgase mit der zweiten feinen Feststoff-Phase und das aus den zweiten Hochdruckdüsen (24) ausströmende zerstäubte Wasser im Gleichstrom fließen.

11. System nach einem der Ansprüche 4 bis 10, wobei die mindestens eine Filtereinheit (20', 20", 20‴) eine dritte Filtereinheit (20‴) umfasst, die so ausgebildet ist, dass sie übelriechende Substanzen und/oder unverbrannte Partikel, die in den Abgasen vorhanden sind, abscheidet, wobei die dritte Filtereinheit (20‴) mindestens
einen dritten Einlass (200‴) für die zu filternden Abgase und mindestens einen dritten Auslass (210‴) für die gefilterten Abgase umfasst, wobei das System ferner mindestens einen Behälter (230) mit einem Oxidationsmittel umfasst, das dem Wasser zuzusetzen ist, um chemisch auf die zu filternden Abgase einzuwirken, die durch den dritten Einlass (200‴) einströmen, um die übelriechenden Substanzen und/oder unverbrannten Partikel zu beseitigen.

12. System nach Anspruch 11, wobei die Hochdruckdüsen (24) dritte Hochdruckdüsen (24‴) sind, wobei die Fluidverbindungsleitung (25) das mindestens eine Wasserreservoir (21) und den mindestens einen Behälter (230) mit Oxidationsmittel mit den dritten Hochdruckdüsen (24‴) fluidisch verbindet, wobei die dritte Filtereinheit (20‴) so ausgebildet ist, dass die dritten Hochdruckdüsen (24‴) zerstäubtes Wasser in Tropfen mit einem durchschnittlichen Durchmesser von 5 Mikrometern bis 30 Mikrometern und bei einem Arbeitsdruck von 200 bar bis 300 bar versprühen.

## Revendications

1. Un système de filtrage d'air frais circulant dans un tunnel (T) recouvrant une chaussée (R) et/ou de filtrage de gaz d'échappement sortant de celui-ci (T), comprenant :
- au moins un premier port (300, 310) adapté pour être relié de manière fluidique à l'environnement extérieur (A) pour la circulation de l'air frais, respectivement adapté pour être relié de manière fluidique au tunnel (T) pour l'admission des gaz d'échappement, devant être filtrés ;
- des moyens de filtrage (20) pour filtrer les gaz d'échappement et/ou l'air frais ;
- au moins un deuxième port (300, 310) adapté pour être relié de manière fluidique au tunnel (T) pour l'évacuation de l'air frais, respectivement adapté pour être relié de manière fluidique à l'environnement extérieur (A) pour l'évacuation des gaz d'échappement filtrés ;
- une première ligne pour la liaison fluidique desdits au moins un premier port (300, 310) et au moins un deuxième port (300, 310) traversant lesdits moyens de filtrage (20) ;
- des moyens de ventilation (V) pour forcer l'évacuation des gaz d'échappement à partir du tunnel (T) vers l'environnement extérieur ou l'entrée de l'air frais provenant de l'environnement extérieur dans le tunnel (T) ;
lesdits moyens de filtrage (20) comprenant au moins une unité de filtrage (20', 20", 20‴) qui comprend :
- au moins un réservoir d'eau (21) ;
- des moyens de pompage (22) ;
- une pluralité de buses à haute pression (24) pour pulvériser de l'eau atomisée ;
- une ligne (25) pour la liaison fluidique dudit au moins un réservoir d'eau (21) avec lesdites buses à haute pression (24) traversant lesdits moyens de pompage (22) ;
dans lequel lesdits moyens de pompage (22) comprennent au moins une pompe à haute pression ; et
dans lequel ladite pluralité de buses à haute pression (24) pulvérisent de l'eau atomisée en gouttes ayant un diamètre moyen inférieur à 250 µm, et à une pression de travail minimale de 200 bars, et
dans lequel ladite au moins une unité de filtrage (20', 20", 20‴) comprend au moins un élément laminaire poreux (220) pour la collecte de résidus de filtration des gaz d'échappement et/ou de l'air frais, ledit au moins un élément laminaire poreux (220) étant assemblé dans ladite au moins une unité de filtrage (20', 20", 20‴) d'une manière amovible ; et
dans lequel ledit au moins un élément laminaire poreux (220) est placé sous lesdites buses à haute pression (24) pour collecter le mélange d'eau et de résidus de filtration, la porosité de celui-ci étant de manière à permettre à l'eau de traverser la retenue des résidus de filtration ; et
dans lequel l'élément laminaire poreux (220) a une perméabilité supérieure ou égale à 85 l/s m² et une porosité qui n'est pas inférieure à 85 %, avec un diamètre moyen des pores de 100 µm.

2. Système selon la revendication 1, dans lequel ledit au moins un élément laminaire poreux (220) est en polyamide non tissé ou en tissu de polyester.

3. Système selon l'une quelconque des revendications précédentes, dans lequel lesdits moyens de ventilation (V) sont configurés pour forcer l'évacuation des gaz d'échappement provenant du tunnel (T) vers l'environnement extérieur (A), ladite au moins une unité de filtrage (20', 20", 20‴) étant configurée pour filtrer les gaz d'échappement sortant du tunnel (T) pour pomper des gaz d'échappement filtrés dans l'environnement extérieur.

4. Système selon l'une quelconque des revendications précédentes, dans lequel ladite au moins une unité de filtrage (20', 20", 20‴) comprend une première unité de filtrage (20') configurée pour réduire une première phase grossière solide des gaz d'échappement ayant un premier diamètre minimum prédéterminé, ladite première unité de filtrage (20') comprenant au moins une première entrée (200') pour les gaz d'échappement avec ladite première phase grossière solide, au moins une première sortie (210') étant prévue pour les gaz d'échappement libérés de ladite première phase grossière solide.

5. Système selon la revendication 4, dans lequel ladite première unité de filtrage (20') est configurée de telle manière que lesdites premières buses à haute pression (24') pulvérisent de l'eau atomisée en gouttes ayant un diamètre moyen de 80 µm à 200 µm et à une pression de travail de 200 bars à 280 bars.

6. Système selon la revendication 4 ou 5, dans lequel lesdits gaz d'échappement avec ladite première phase grossière solide et l'eau atomisée sortant desdites premières buses à haute pression (24') circulent à contre-courant.

7. Système selon l'une quelconque des revendications 4 à 6, dans lequel ladite au moins une unité de filtrage (20', 20", 20‴) comprend une deuxième unité de filtrage (20") configurée pour réduire une deuxième phase fine solide des gaz d'échappement ayant un deuxième diamètre prédéterminé maximum, ladite deuxième unité de filtrage (20") comprenant au moins une deuxième entrée (200") pour les gaz d'échappement avec ladite deuxième phase fine solide et au moins une deuxième sortie (210") pour les gaz d'échappement libérés de ladite deuxième phase fine solide.

8. Système selon la revendication 7, dans lequel ladite deuxième phase fine solide comporte des particules ayant un diamètre moyen inférieur à 10 µm qui se développent dans le tunnel (T) suite à un trafic de véhicules.

9. Système selon la revendication 7 ou 8, dans lequel lesdites buses à haute pression (24) de ladite deuxième unité de filtrage (20") sont des deuxièmes buses à haute pression (24), ladite deuxième unité de filtrage (20") étant configurée de manière à ce que lesdites deuxièmes buses à haute pression (24) pulvérisent de l'eau atomisée en gouttes ayant un diamètre moyen de 5 µm à 30 µm et à une pression de travail de 250 bars à 350 bars.

10. Système selon la revendication 7, 8 ou 9, dans lequel lesdits gaz d'échappement avec ladite deuxième phase fine solide et l'eau atomisée sortant desdites deuxièmes buses à haute pression (24) circulent à co-courant.

11. Système selon l'une quelconque des revendications 4 à 10, dans lequel ladite au moins une unité de filtrage (20', 20", 20‴) comprend une troisième unité de filtrage (20‴) configurée pour réduire des substances malodorantes et/ou des particules non brûlées présentes dans les gaz d'échappement, ladite troisième unité de filtrage (20‴) comprenant au moins une troisième entrée (200‴) pour les gaz d'échappement devant être filtrés et au moins une troisième sortie (210‴) pour les gaz d'échappement filtrés, le système comprenant en outre au moins un conteneur (230) d'un produit oxydant devant être ajouté à l'eau pour agir chimiquement sur les gaz d'échappement devant être filtrés circulant à travers ladite troisième entrée (200‴) de manière à réduire lesdites substances malodorantes et/ou particules non brûlées.

12. Système selon la revendication 11, dans lequel lesdites buses à haute pression (24) sont des troisièmes buses à haute pression (24‴), ladite ligne de liaison fluidique (25) reliant de manière fluidique ledit au moins un réservoir d'eau (21) et ledit au moins un conteneur (230) de produit oxydant auxdites troisièmes buses à haute pression (24‴), ladite troisième unité de filtrage (20‴) étant configurée de manière à ce que lesdites troisièmes buses à haute pression (24‴) pulvérisent de l'eau atomisée en gouttes ayant un diamètre moyen de 5 µm à 30 µm et à une pression de travail de 200 bars à 300 bars.
